(19) Europäisches Patentamt
European Patent Office
Office européen des brevets

(11) **EP 4 086 893 B1**

## (12) EUROPEAN PATENT SPECIFICATION

(45) Date of publication and mention
of the grant of the patent:
**21.08.2024 Bulletin 2024/34**

(21) Application number: **21204028.1**

(22) Date of filing: **21.10.2021**

(51) International Patent Classification (IPC):
**G10L 15/183** *(2013.01)* G10L 15/22 *(2006.01)*
G10L 15/32 *(2013.01)* G10L 15/16 *(2006.01)*
G10L 15/26 *(2006.01)*

(52) Cooperative Patent Classification (CPC):
**G10L 15/183;** G10L 15/16; G10L 15/26;
G10L 15/32; G10L 2015/227; G10L 2015/228

(54) **NATURAL LANGUAGE UNDERSTANDING METHOD AND DEVICE, VEHICLE AND MEDIUM**

VERFAHREN UND VORRICHTUNG ZUM VERSTEHEN VON NATÜRLICHER SPRACHE, FAHRZEUG UND MEDIUM

PROCÉDÉ ET DISPOSITIF DE COMPRÉHENSION DE LANGAGE NATUREL, VÉHICULE ET SUPPORT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.07.2021 CN 202110767277**

(43) Date of publication of application:
**09.11.2022 Bulletin 2022/45**

(73) Proprietor: **Zhaoqing Xiaopeng New Energy Investment Co., Ltd.**
**Zhaoqing Hi-Tech Industrial Development Zone Zhaoqing (CN)**

(72) Inventors:
• **LI, Chenyan**
**Zhaoqing (CN)**

• **ZHAO, Yao**
**Zhaoqing (CN)**
• **WENG, Zhiwei**
**Zhaoqing (CN)**
• **YI, Hui**
**Zhaoqing (CN)**

(74) Representative: **Ran, Handong et al**
**Maucher Jenkins**
**Seventh Floor Offices**
**Artillery House**
**11-19 Artillery Row**
**London SW1P 1RT (GB)**

(56) References cited:
**US-A1- 2021 104 236**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of Invention

The present application relates to the field of transportation, and in particular to a natural language understanding method, a natural language understanding device, a vehicle and a computer readable storage medium.

### Background

With the development of the natural language understanding (NLU) technology, input speech is generally recognized frame by frame by an ASR technology framework and a recognition result is returned in real time. After an end-of-sentence marker is detected, a continuous listening and waiting timeout mechanism is introduced, and NLU is performed on the ASR recognition result when the waiting timeout is finished. The traditional natural language understanding approach is time-consuming and cannot be efficiently parallelized with ASR. In another NLU technology, recognition and prediction can be performed simultaneously, however, the traditional single-model concept cannot be used for accurate prediction for a specific user.

Patent application publication US2021104236A1 discloses techniques for performing incremental natural language understanding on a natural language understanding (NLU) system, wherein the NLU system acquires a first audio speech segment associated with a user utterance, converts the first audio speech segment into a first text segment, determines a first intent based on a text string associated with the first text segment, and generates a first response based on the first intent prior to when the user utterance completes.

### Summary of Invention

In view of this, embodiments of the present application provide a natural language understanding method, a natural language understanding device, a vehicle and a computer readable storage medium.

Aspects of the present invention are set out in the accompanying claims.

Additional aspects and advantages of the embodiments of the present application will be given in the following description, and part will become apparent from the following description, or from the practice of the present application.

### Brief Description of Drawings

The above and/or additional aspects and advantages of the present application will become apparent and easily understood from the description of the embodiments in combination with the accompanying drawings below, wherein:

Fig. 1 is a flow chart of a natural language understanding method of the present application;
Fig. 2 is a schematic diagram of a module of a natural language understanding device of the present application;
Fig. 3 is a flow chart of a natural language understanding method of the present application;
Fig. 4 is a flow chart of a natural language understanding device of the present application;
Fig. 5 is a schematic diagram of a module of a natural language understanding device of the present application;
Fig. 6 is an example diagram for a natural language understanding method of the present application;
Fig. 7 is a flow chart of a natural language understanding method of the present application;
Fig. 8 is an example diagram of a natural language understanding method of the present application;
Fig. 9 is a flow chart of a natural language understanding device of the present application;
Fig. 10 is a flow chart of a natural language understanding device of the present application;
Fig. 11 is a flow chart of a natural language understanding device of the present application;
Fig. 12 is a schematic diagram of a module of a natural language understanding device of the present application.

### Detailed Description

The embodiments of the present application are described in detail below, and examples of the embodiments are shown in the accompanying drawings, wherein the same or similar reference numerals throughout the text indicate the same or similar elements or elements having the same or similar functions. The embodiments described below by reference to the accompanying drawings are exemplary and are merely intended to explain the embodiments of the present application and are not to be construed as limiting the embodiments of the present application.

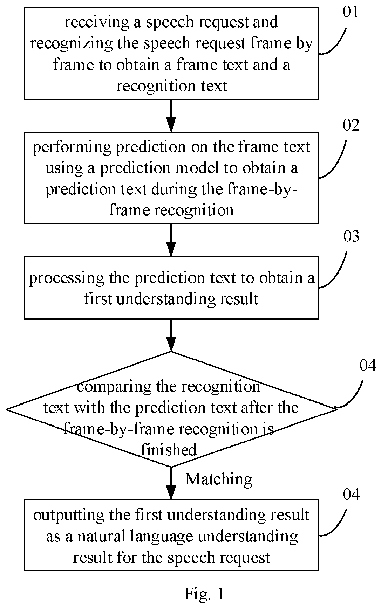

Please refer to Fig. 1, and the present application provides a natural language understanding method, including:

01: receiving a speech request and recognizing the speech request frame by frame to obtain a frame text and a recognition text, wherein the recognition text is a recognition result of all frames in the speech request;
02: performing prediction on the frame text using a prediction model to obtain a prediction text during the frame-by-frame recognition, wherein the prediction model is trained according to user language habits;
03: processing the prediction text to obtain a first processing result; and
04: comparing the recognition text with the prediction text after the frame-by-frame recognition is finished, and when the recognition text matches with the prediction text, outputting the first processing result as a natural language understanding result for the speech request.

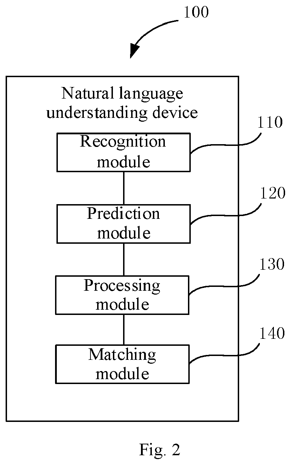

Correspondingly, please refer to Fig. 2, the present application further provides a natural language understanding device 100, and the natural language understanding method of the embodiments of the present application is implemented through the natural language understanding device 100. The natural language understanding device 100 includes a recognition module 110, a prediction module 120, a processing module 130 and a matching module 140. Step 01 is implemented through the recognition module 110, step 02 is implemented through the prediction module 120, step 03 is implemented through the processing module 130, and step 04 is implemented through the matching module 140. Or in other words, the recognition module 110 is configured to receive a speech request and recognize the speech request frame by frame to obtain a frame text and a recognition text. The prediction module 120 is configured to perform prediction on the frame text using a prediction model to obtain a prediction text during the frame-by-frame recognition. The processing module 130 is configured to process the prediction text to obtain a first processing result. The matching module 140 is configured to compare the recognition text with the prediction text after the frame-by-frame recognition is finished, and when the recognition text matches with the prediction text, output a first processing result as a natural language understanding result for the speech request.

The embodiment of the present application further provides a vehicle. The vehicle includes memory and a processor. A computer program is stored in the memory. The processor is configured to: receive a speech request and recognize the speech request frame by frame to obtain a frame text and a recognition text; in the frame-by-frame recognition, perform prediction on the frame text using a prediction model to obtain a prediction text; process the prediction text to obtain a first processing result; and after the frame-by-frame recognition process is finished, compare the recognition text with the prediction text, and when the recognition text matches with the prediction text, the first processing result is output as a natural language understanding result for the speech request.

Specifically, the vehicle may include electric vehicles, automobiles, flying cars, airplanes, high-speed trains and other vehicles that can be subjected to natural language understanding. The embodiments are expanded with the vehicle as an example below to facilitate description.

Specifically, in step 01, a speech request is received and the speech request is recognized frame by frame to obtain a frame text and a recognition text. The speech request may include a speech audio, such as a speech audio instruction "turn on the air conditioner" issued by a user during natural language understanding with a vehicle, or an audio played by an intelligent device.

When a speech request is received, a speech request such as a speech audio is recognized frame by frame to obtain a frame text and a recognition text, and the recognition text is a recognition result of all frames of the speech request. Wherein, as to the recognition, the speech audio may be recognized frame by frame through an automatic speech recognition (ASR) technology. The ASR performs frame-by-frame recognition on the received speech audio or sound, it can be understood that sound is divided into frames, that is, the sound is cut into small segments, and each small segment is called a frame, a moving window function is used to achieve this, and the frames are generally overlapped. The ASR recognizes frame by frame and returns at each moment the recognition result from a starting frame to the current frame, i.e., a frame text and a recognition text. For example, the frame text recognized frame by frame at T1 is: "turn", at T2: "turn on", at T3: "turn on air", at T4: "turn on air-conditioner". After the ASR recognizes an end frame, a recognition text is obtained: "turn on air-conditioner". The frame text can include the recognition text with "word" as a unit, such as "turn", "turn on" or "turn on air" in the sound "turn on air-conditioner". The recognition text includes a recognition result of all frames of the speech request, such as "turn on air-conditioner".

In step 02, during the frame-by-frame recognition, the frame text is predicted using the prediction model to obtain the prediction text, and the prediction model is trained according to user language habits. The expression "during the frame-by-frame recognition" may refer to where the speech frequency recognition has been started and not yet finished, including the initial state of the recognition process, when a frame text containing data has been obtained, when the frame-by-frame recognition has started but not yet obtained a frame text, and before having recognized all the frames to obtain a recognition result.

In the frame-by-frame recognition process, a prediction model is used to predict the obtained frame text to obtain a prediction text. Wherein, the prediction model is trained according to user language habits, wherein said including user language habits may include the individual user language habits of a user using a vehicle, such as including word formation habits, dialects, speech sequences, etc. Time-specific language and the like may also be included. The first data used for training may include real data of an individual user, such as using the data of the individual user during the past three months, and updating the data every three months to update the training of a first prediction model once.

The prediction model includes multiple machine learning models, and training is performed through prior understanding, learning or using related data. The related data contains the individual language habits of a user. Prediction on a frame text includes prediction on the frame text which has been recognized to obtain the next text content associated with the frame text, such as words or characters.

In an example, the received user speech is "turn", then the current frame text is further recognized to be "turn", the prediction text of "turn" is predicted to be "turn on", "turn on air-conditioner" through a prediction model.

The time for a prediction model to start prediction may include starting prediction from recognition and beginning prediction of a recognized word, i.e., a frame text, when a factor or a word is recognized.

The time for a prediction model to start prediction may also include starting prediction from a frame text that satisfies a preset condition, such as starting when two words are recognized, or starting when a verb is recognized, while the frame text which does not satisfy a preset condition is not predicted. Unnecessary prediction can be avoided to a certain extent and the prediction efficiency can be improved.

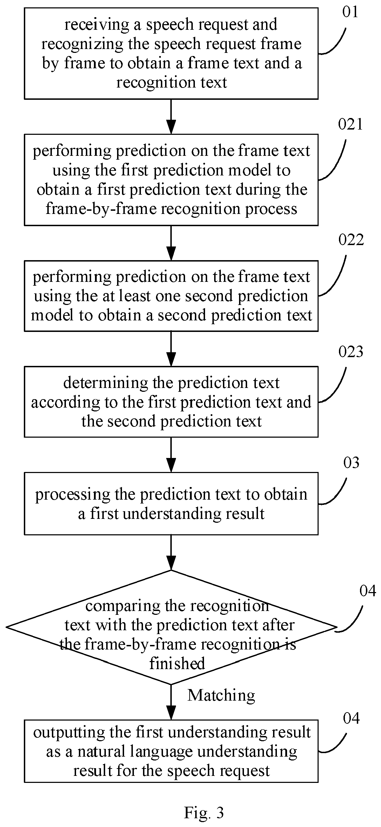

Referring to Fig. 3, the prediction module includes a first prediction model and at least one second prediction model, and performing prediction on the frame text using a prediction model to obtain a prediction text includes:

> 021: performing prediction on the frame text using the first prediction model to obtain a first prediction text, wherein the first prediction model is generated through training based on first data comprising data for user language habits;
> 022: performing prediction on the frame text using the at least one second prediction model to obtain a second prediction text, wherein the second prediction model is generated by training a deep learning model based on second data comprising data for application fields; and
> 023: determining the prediction text according to the first prediction text and the second prediction text.

Steps 021-023 are implemented through a prediction module 120. In other words, the prediction module 120 is configured to perform prediction on the frame text using the first prediction model to obtain a first prediction text, to perform prediction on the frame text using the second prediction model to obtain a second prediction text, and to determine the prediction text according to the first prediction text and the second prediction text.

A processor is configured to perform prediction on the frame text using the first prediction model to obtain a first prediction text.

Specifically, the prediction model includes the first prediction model and the at least one second prediction model. The first prediction model is generated through training based on the first data including data for user language habits, and the second prediction model is generated by training a training deep learning model based on the second data including data for application fields. Said including data for the user language habits may include the individual user language habits of a user using a vehicle, such as including word formation habits, dialects, speech sequences, etc. Time-specific language and the like may also be included. The first data used for training may include real data of an individual user, such as using the data of the individual user during the past three months, and updating the data every three months to update the training of the first prediction model once.

It should be noted that the first data used by a first prediction model desensitizes individual user data to protect privacy, and all the user data may be desensitized during a data analysis process, i.e., user IDs are mapped to specific numbers, therefore, it cannot be locked to the vehicle through the user ID, and further locked to the individuals. In addition, all the sensitive words are filtered offline to ensure that no personally identifiable information or sensitive information exists in the uploaded user data. Moreover, user data is only saved on an online workstation, and through specific technology, the data can only be used for model training and deleted periodically to ensure that the data cannot be downloaded.

The first prediction model may be based on a language statistical model such as an N-gram model and is periodically trained with the first data. When a frame text is received, the frame text is predicted using the first prediction model to obtain a first prediction text.

Meanwhile, the second prediction model is generated by training a deep learning model based on the second data comprising data for the application fields. The second data containing the application field includes related data of the applied technical field, for example, if the application is for a vehicle, second data of the application field can be derived from historical or simulated data of the natural language understanding of all the users with the vehicle, such as "turn on an air conditioner, turn on a radio, turn down the volume", for another example, if the application is for a high-speed train, second data of the application field can be derived from historical or simulated data of the natural language understanding of a train driver with the train, such as "call a dispatcher, open a gate", etc. Compared with first data of a first prediction model which includes limited historical data of the user, the second data can be based on a large amount of training data from the application field, with a large amount of learning data. The second data may or may not include the first data, and there is no correlation between the two.

The second prediction model can be generated based on a large amount of second data, such as deep learning models with a large number of parameters. Deep learning models have powerful language modeling capabilities, for example, speech instructions of users can be accurately predicted based on a large vehicle speech corpus. The deep learning models may include Transformer structure-based models Transformer seq2seq, GPT2, UNILM, BART, MASS, LSTM, or RNN models.

One or more second prediction models may be available, and when multiple second prediction models are available, the same type of model may be used or different types of models may be used. It can be understood that compared with one prediction model, multiple second prediction models can improve prediction accuracy of a prediction model to a certain extent, and compared with multiple second prediction models, one prediction model can balance prediction accuracy and prediction time of a prediction model.

When the second prediction model is trained using second data, the speech instructions in the data can be first randomly sliced into data and labels, and then training data and labels are converted into model input vectors using a word splitter, and the processed training data is input to a model and model parameters are optimized through calculating the corresponding loss. When a frame text is received, the second prediction model is used to perform prediction on the frame text to obtain a second prediction text. The input of the second prediction text and input of the first prediction text are both the same frame text, the first prediction text is the output of the first prediction model, and the second prediction text is the output of the second prediction model, and the results output by different prediction models may be the same or different.

When the first prediction text and the second prediction text are obtained, a final prediction text is determined according to the two. The determination method includes, but is not limited to, selecting the prediction result with higher model accuracy as a final prediction text according to the model accuracy of each prediction model, or performing weighted merger processing on multiple prediction models.

In this way, as to the prediction model, the final prediction text is determined through a first prediction model based on user idiomatic language, and a second prediction model based on a large number of application fields, and through processing the prediction results of the two comprehensively. To a certain extent, prediction is achieved according to incomplete frame text to understand an input incomplete speech in advance. At the same time, compared with traditional language statistical models, training is performed using a first prediction model based on the individual language data of users, especially for users with special language habits, real-time training and updating can be performed aiming at special characteristics, thereby effectively improving the accuracy of prediction, realizing the ability of diversification or customization to a certain extent, and outputting personalized prediction results for different users.

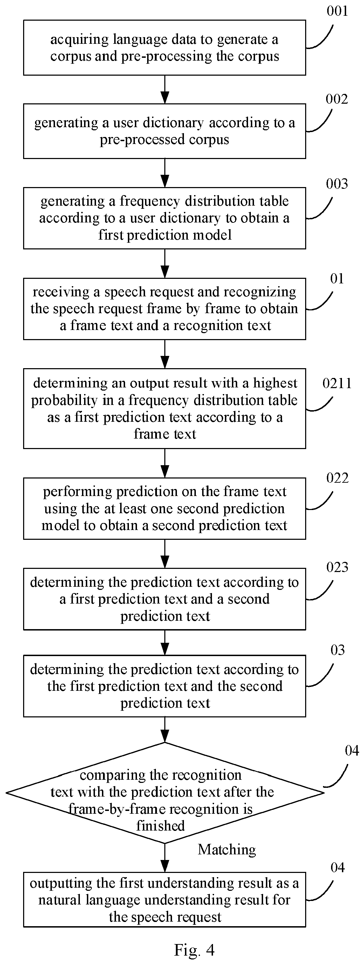

Preferably, please refer to Fig. 4, first data includes language data within a preset time containing user language habits, and a first prediction model is generated through the following steps:

001: acquiring language data to generate a corpus and pre-processing the corpus;

002: generating a user dictionary according to a pre-processed corpus;

003: generating a frequency distribution table according to a user dictionary to obtain a first prediction model.

Correspondingly, step 021 includes:
0211: determining an output result with the highest probability in a frequency distribution table as a first prediction text according to a frame text.

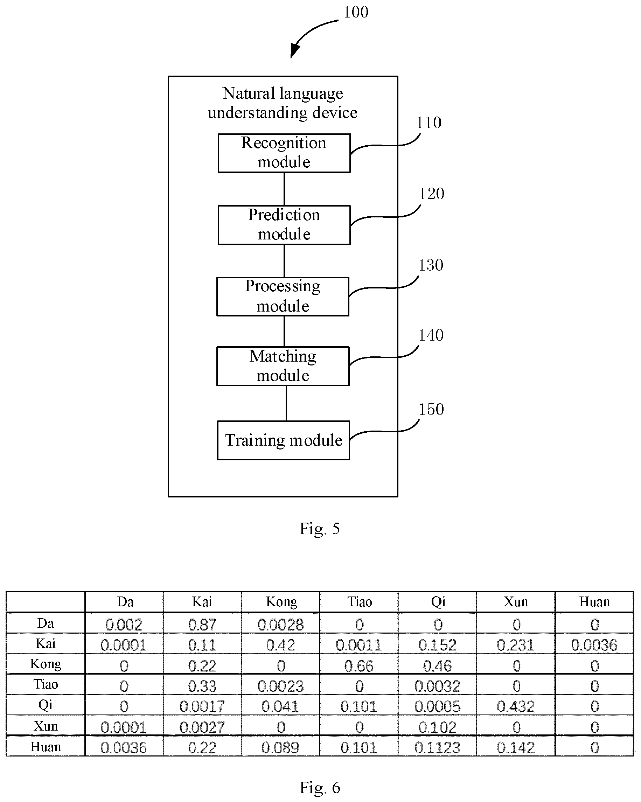

Please refer to Fig. 5, a natural language understanding device 100 further includes a training module 150. Steps 001-003 may be implemented through the training module 150, and step 0211 may be implemented through the prediction module 120. In other words, the training module 150 is configured to acquire language data to generate a corpus and pre-process the corpus, generate a user dictionary according to the predicted corpus, and generate a frequency distribution table according to a user dictionary to obtain a first prediction model. The prediction module 120 is configured to determine an output result with the highest probability in the frequency distribution table as a first prediction text according to a frame text.

The processor is configured to acquire language data to generate a corpus and pre-process the corpus, generate a user dictionary according to the pre-processed corpus, generate a frequency distribution table according to the user dictionary to obtain a first prediction model, and determine an output result with the highest probability in the frequency distribution table as a first prediction text according to a frame text.

Specifically, the first data includes language data within a preset time containing user language habits. If an individual speech audio of a user is obtained for a preset period of three months and language data is generated based on the speech audio, the language data may include information such as a recognition text of the speech audio and generation time, etc.

Further, a corpus is generated according to acquired language data. The corpus may include all the information related to a recognition text of the speech audio collected within a preset time, such as phonetic characters, recording time, and number of occurrences of the recognition text within a fixed time.

When the corpus is generated, the corpus is pre-processed. The pre-processing includes, but is not limited to, processing such as filtering and deduplication, for example, cleaning useless characters such as special characters in a corpus, and de-duplicating repetitive participles in the corpus.

Further, a user dictionary is created according to the pre-processed corpus. The user dictionary includes a recognition text and related information of the individual speech audio of users that is valid within a preset time. After the user dictionary is created, the user dictionary is used to construct a frequency distribution table, and the frequency distribution table includes each character in the user dictionary and its frequency associated with other characters.

In one example, please refer to Fig. 6 which is a frequency distribution table, it can be seen that the probability that "air" appears after "turn" is as follows: p(air|tum) is equal to 0.0028, and the probability that "conditioner" appears after "air" is as follows: p(conditioner|air) is equal to 0.66.

When a frame text is predicted, the frame text is taken as an input, and an output result with the highest probability in the frequency distribution table is determined to be a first prediction text. Please refer to Fig. 6 again, when the current frame text is "turn on air", according to the frequency distribution table, p(conditioner|air) is equal to 0.66, p(flow|air) is equal to 0.46, the probability of p(conditioner|air) is greater than the probability of p(flow|air), then the predicted first prediction text may be "conditioner", which is supplemented to be "turn on air-conditioner".

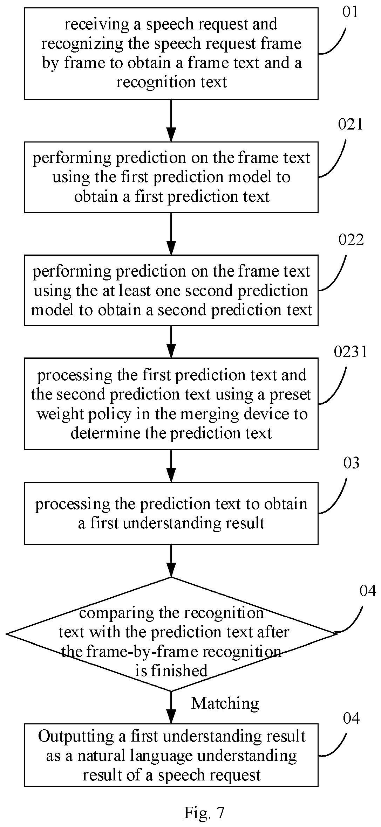

Preferably, please refer to Fig. 7, a prediction model further includes an ensembling device, and step 023 includes:

0231: processing the first prediction text and the second prediction text using a preset weight policy in the ensembling device to determine the prediction text.

Step 0231 may be implemented through a prediction module 120. In other words, the prediction module 120 is configured to process the first prediction text and the second prediction text using a weight policy in the ensembling device to determine the prediction text.

The processor is configured to process the first prediction text and the second prediction text using a preset weight policy in the ensembling device to determine a prediction text.

Specifically, a prediction model is preset with an ensembling device, and the ensembling device includes a preset weight policy to merge a first prediction text output by a first prediction model and a second prediction text output by a second prediction model to finally output a processed result as a prediction text. The weight policy includes setting different weights for each first prediction model and second prediction model, weighted average of the weight is performed on the first prediction text and the second prediction text, respectively, and finally the calculated optimal first prediction text or the second prediction text is taken as the final prediction text.

The prediction model in the present embodiment includes a first prediction model, a second prediction model, and an ensembling device. In a training model stage, the second prediction model is trained using a large amount of second data that contains the application fields without distinguishing users, thereby ensuring effectiveness of prediction to a certain extent. The first prediction model is trained using the first data containing user language habits, which can ensure that prediction results are closer to user language habits to a certain extent. At the same time, prediction results of each prediction model are analyzed using offline data, the prediction results are compared and analyzed with final real results, and the weights corresponding to each prediction model in the ensembling device are set manually, or the weights corresponding to each prediction model in the ensembling device are optimized using the loss of real-time prediction results and real results.

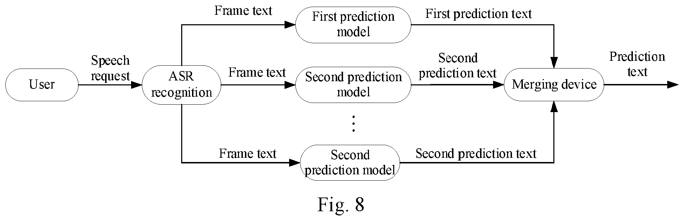

Please refer to Fig. 8 which shows a structural example of a prediction model, wherein a user sends a speech request, recognizes frame by frame through ASR, predicts through a prediction model during the recognition process, and finally outputs a prediction text, wherein the prediction model contains a first prediction model, a plurality of second prediction models, and an ensembling device.

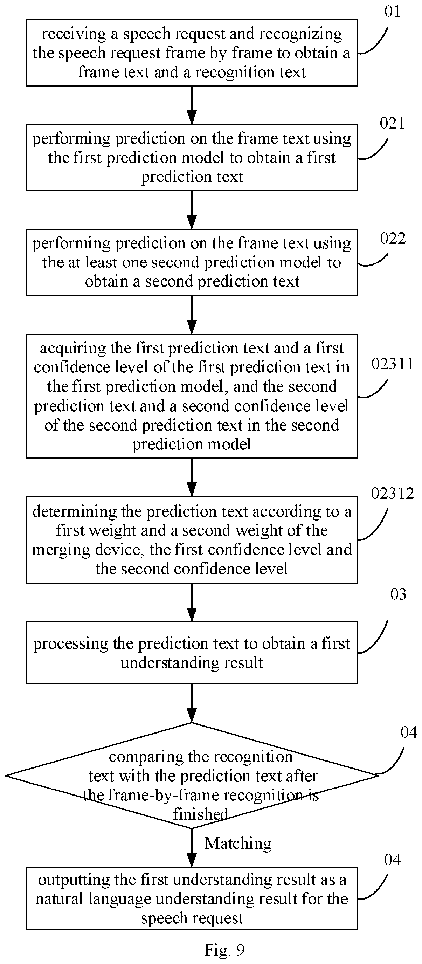

As to the determining method of the weight policy, preferably, please refer to Fig. 9, step 0231 includes:

02311: acquiring the first prediction text and a first confidence level of the first prediction text in the first prediction model, and the second prediction text and a second confidence level of the second prediction text in the second prediction model;
02312: determining the prediction text according to a first weight and a second weight of the ensembling device, the first confidence level and the second confidence level, wherein the first weight is determined according to first model accuracy of the first prediction model, and the second weight is determined according to second model accuracy of the second prediction model.

Steps 02311 and 02312 may be implemented through the prediction module 120. In other words, the prediction module 120 is configured to acquire the first prediction text and a first confidence level of the first prediction text in the first prediction model, and the second prediction text and a second confidence level of the second prediction text in the second prediction model, and determine the prediction text according to a first weight and a second weight of the ensembling device and the first confidence level and the second confidence level, wherein the first weight is determined according to the first model accuracy of the first prediction model, and the second weight is determined according to the second model accuracy of the second prediction model.

The processor is configured to acquire the first prediction text and a first confidence level of the first prediction text in the first prediction model, and the second prediction text and a second confidence level of the second prediction text in the second prediction model, and determine the prediction text according to the first weight and the second weight of the ensembling device as well as the first confidence level and the second confidence level, wherein the first weight is determined according to the first model accuracy of the first prediction model, and the second weight is determined according to the second model accuracy of the second prediction model.

Specifically, the first weight corresponding to the first prediction model is determined according to the first model accuracy of the first prediction model, and the second weight corresponding to the second prediction model is determined according to the second model accuracy of the second prediction model. Wherein, first model accuracy $Acc(C_1)$ and second model accuracy $Acc(C_2)$ are determined according to offline analysis of model performance of each prediction model, and are adjusted according to the later prediction accuracy. The higher the model prediction accuracy is, the higher its model accuracy is. And the first weight $w_1$ and the second weight $w_2$ can be determined according to the following calculation formula:

$$w_i = \frac{Acc(C_i)}{\sum_1^n Acc(C_j)}$$

In an example, the first model accuracy $Acc(C_1)$ is equal to 0.8, the second model accuracy $Acc(C_2)$ is equal to 0.7, then the first weight $w_1$ is equal to 0.8/(0.8+0.7), that is, 0.53, and the second weight $w_2$ is equal to 0.7/(0.8+0.7), that is, 0.46.

After the first weight and the second weight are determined in advance, when the ensembling device receives the input first prediction text and the second prediction text, the ensembling device acquires the first prediction text and the first confidence level of the first prediction text in the first prediction model, and the second prediction text and the second confidence level of the second prediction text in the second prediction model. The first confidence level and the second confidence level include probabilities corresponding to the words or characters included in the first prediction text or the second prediction text in a frequency distribution table.

Specifically, the ensembling device acquires an output of a plurality of first prediction models and second prediction models C1, ... , Cn at the current moment t, i.e., characters V1, ... , Vn of the first prediction text and the second prediction text, and the corresponding confidence levels P1, ... , Pn. The corresponding weights W1, ..., Wn are then multiplied by the confidence levels P1, ... , Pn, i.e., Si=Pi*Wi, to obtain scores S1, ... , Sn corresponding to each character V1, ... , Vn. The word Vm corresponding to the largest score Sm is selected as the final prediction text at the current moment.

In this way, the model performance and prediction accuracy of each prediction model is analyzed offline at regular or irregular intervals, and the weight policy is set manually, and manual adjustment can be performed aiming at individual language habits of users, so as to get a better prediction model to understand individual language of users. At the same time, the scores are calculated through the model accuracy and the confidence level, so as to select the prediction text with the highest score as a final prediction result, thereby simplifying the implementation logic and improving the prediction speed to a certain extent.

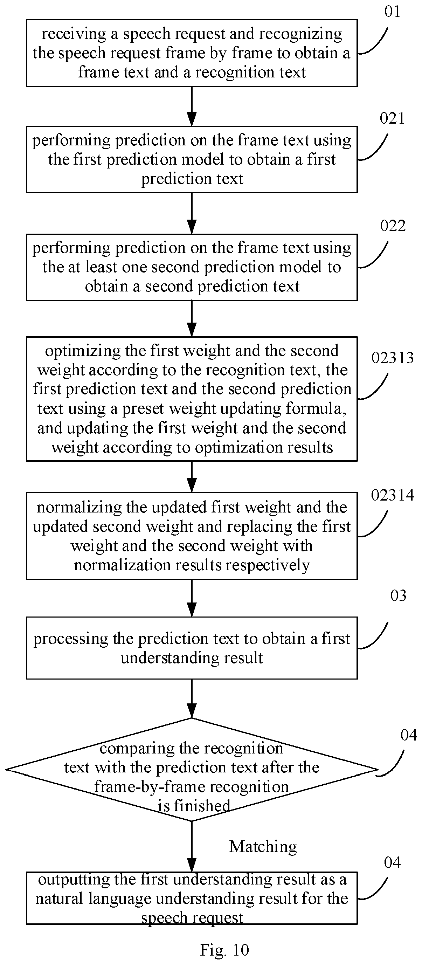

Preferably, please refer to Fig. 10, step 0231 further includes:

02313: optimizing the first weight and the second weight according to the recognition text, the first prediction text and the second prediction text using a preset weight updating formula, and updating the first weight and the second weight according to optimization results; and
02314: normalizing the updated first weight and the updated second weight and replacing the first weight and the second weight with normalization results respectively.

Steps 02313 and 02314 may be implemented through a prediction module 120. In other words, the prediction module 120 is configured to: optimize the first weight and the second weight according to the recognition text, the first prediction text, and the second prediction text using a preset weight updating formula and update the first weight and the second weight according to optimization results; and to normalize the updated first weight and the updated second weight and replace the first weight and the second weight with normalization results respectively.

The processor is configured to: optimize the first weight and the second weight according to the recognition text, the first prediction text and the second prediction text using a preset weight updating formula and update the first weight and the second weight according to the optimization result; and normalize the updated first weight and the updated second weight and replace the first weight and the second weight with normalization results respectively.

Specifically, the first weight is determined in advance according to the first model accuracy of the first prediction model, and the second weight is determined according to the second model accuracy of the second prediction model. Then, during prediction, the prediction text is determined according to the first weight and the second weight as well as the first confidence level and the second confidence level, and after the real recognition text is finally obtained, the first weight and the second weight are optimized according to the recognition text, the first prediction text and the second prediction text using a preset weight updating formula and the first weight and the second weight are updated according to optimization results.

It can be understood that the recognition text is a real result, and the first prediction text and the second prediction text are prediction results. Compared with the above offline manual weight updating policy, in the present embodiment, the weight can be automatically adjusted according to the difference between the real result and the prediction result by means of a preset weight updating formula. The preset weight updating formula may optimize the input original weight through calculating the loss between the real result and the prediction result by means of a loss function, to obtain the optimized weight, e.g., through such calculation methods as Aggregating expert algorithms.

The initial values of the first weight and the second weight may be arbitrarily set values with no need of calculating a solution according to the first model accuracy and the second model accuracy. Since optimization and updating can be performed later according to the real result, therefore, the initial values of the first weight and the second weight can be set to arbitrary values based on the improved prediction efficiency of the simplified calculation, for example, the initial values of each prediction model are the same weight values, etc.

Further, the updated first weight and the updated second weight are normalized respectively and the first weight and the second weight are replaced with the processing results. Since the prediction models are a plurality of first prediction models and second prediction models, the sum of all the finally updated first weights and second weights may not be 1. Then, all the updated weights are normalized, such as the updated weights are $w_1, ... w_n$, then final weights are obtained by the following normalization formula:

$$w_i' = \frac{w_i}{\sum_1^n w_i}$$

for the updating formula, preferably, the weight updating formula includes:

$$w_i' = \frac{w_i}{\sum_1^n w_i}$$

wherein $\eta$ represents the learning rate, $p_i$ represents the first weight of the first prediction model or the second weight of the second prediction model, $\gamma_i$ represents the first prediction text or the second prediction text, $\omega$ represents the recognition text, and $\lambda(\gamma_i, \omega)$ represents a vector distance between the recognition text and the first prediction text or between the recognition text and the second prediction text.

As to the text content of the first prediction text or the second prediction text in $\lambda(\gamma_i, \omega)$, corresponding vector values can be obtained in a word vector library word2vec preset in an ensembling device, such that a vector distance between the recognition text and the first prediction text or the second prediction text can be represented by $\lambda(\gamma_i, \omega)$. The expression of $\lambda(\gamma_i, \omega)$ can include Euclidean distance, Manhattan distance or Chebyshev distance, etc., and the specific expression will not be repeated redundantly herein.

In an example, the prediction model includes one first prediction model E1 and two second prediction models E2 and E3, suppose that the learning rate $\eta$ is equal to 0.2, the original weights are as follows: $w_1$=0.4, $w_2$=0.4, $w_3$=0.2. The input frame text is "turn on air", the final recognition text is "turn on air-conditioner", $\omega$ is 1, the first prediction text of $E_1$ is "turn on air-conditioner", the second prediction text of $E_2$ is "turn on air flow", the second prediction text of $E_3$ is "turn on air space", $\gamma_1$=1, $\gamma_2$=0.7, $\gamma_3$=0.2. $\lambda(\gamma_i, \omega) = (\gamma_i - \omega)^2$, then the following equations can be obtained through calculation of the weight updating formula $g_i(\omega)$:

$$g_1(\omega)=0.4 * e^{-0.2* (1-1)^2}=0.4;$$

$$g_2(\omega)=0.4 * e^{-0.2*(0.7-1)^2}=0.39;$$

$$g_3(\omega) = 0.2 * e^{-0.2* (0.2-1)^2}=0.18.$$

Further, after obtaining updated weight, the updated first weight and the updated second weight are respectively normalized.

$$g'_1(\omega)=0.4/(0.4+0.39+0.18)=0.41;$$

$$g'_2(\omega)=0.39/(0.4+0.39+0.18)=0.40;$$

$$g'_3(\omega)=0.18/(0.4+0.39+0.18)=0.19;$$

Finally, the original $w_1$=0.4, $w_2$=0.4 and $w_3$=0.2 are updated to $w_1$=0.41, $w_2$=0.40 and $w_3$=0.19.

In this way, the loss calculation is performed on the finally acquired real recognition text and the prediction text, and the original weight is updated through the calculation results, such that the weight policy of an ensembling device can be dynamically adjusted adaptively, in the process of real-time prediction, the weight of each prediction model is optimized in real time through the real results, such that the accuracy of the final prediction result is higher.

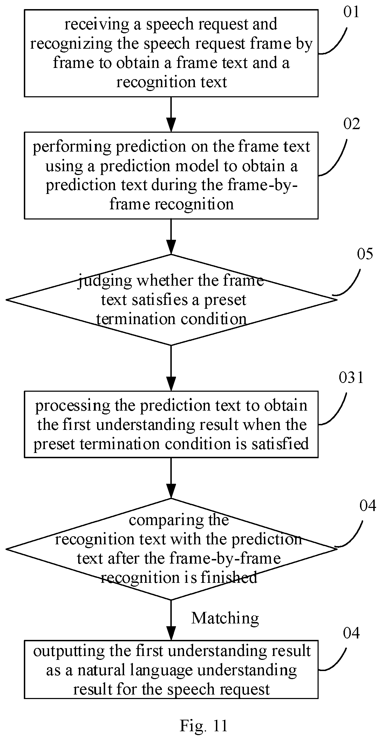

Preferably, please refer to Fig. 11, before processing the prediction text to obtain the first processing result, the method further includes:

05: determining whether the frame text satisfies a preset termination condition.

Processing the prediction text to obtain the first processing result includes:

031: processing the prediction text to obtain the first processing result when the preset termination condition is satisfied.

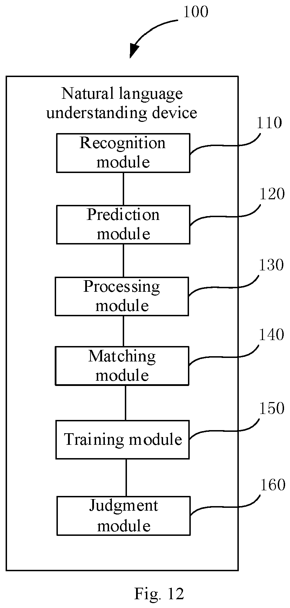

Please refer to Fig. 12, the natural language understanding device 100 further includes a judgment module 160, step 05 may be implemented through the judgment module 160, and step 031 may be implemented through the processing module 130. In other words, the judgment module 160 is configured to determine whether the text satisfies the preset termination condition, and when the preset termination condition is satisfied, process the prediction text to obtain the first processing result.

The processor is configured to determine whether the frame text satisfies a preset termination condition, and if so, to process the prediction text to obtain a first processing result.

Specifically, when the ensembling device performs weight processing on the first prediction text and the second prediction text, the ensembling device may determine whether the current frame text satisfies a preset termination condition, wherein the preset termination condition includes, but is not limited to, whether a preset terminator appears or whether a preset prediction length is reached. That is, whether the current prediction can be stopped. When the terminator appears or the preset prediction length has been reached, the prediction text is processed to obtain the first processing result.

Further, after the final prediction text is obtained, in step 03, the prediction text is processed to obtain the first processing result. Wherein, the processing of the prediction text includes the processing of natural language understanding (NLU), which includes understanding the language content in the prediction text by machine learning of artificial intelligence based on NER, syntactic analysis, intent recognition, semantic slot filling, etc. Moreover, the obtained first processing results are cached and subjected to other processing, to wait for the end of the final frame-by-frame recognition process.

In step 04, after the frame-by-frame recognition is finished, the recognition text compared with the prediction text, and if the recognition text matches with the prediction text, the first processing result is output as the natural language understanding result of the speech request. After the frame-by-frame recognition process of the speech request by ASR, a recognition text can be obtained, and the recognition text compared with the prediction text to see whether the contents of the two texts are consistent, or whether the prediction result is consistent with the real ASR result, and if the matching result is consistent, the first processing result of the prediction text is output as the final natural language understanding result. And when the matching result is inconsistent, or when the content of the prediction text is inconsistent with the ASR result, the prediction result is incorrect, the prediction is ignored and the ASR result, i.e., the recognition text, is subjected to NLU.

Embodiments of the present application further provide a computer readable storage medium. One or more non-transitory computer readable storage media storing a computer program which, when executed, results in performance of the natural language understanding method of any of the above embodiments when the computer program is executed by one or more processors. Those skilled in the art can understand that the implementation of all or part of the process in the method of the above embodiments can be completed by means of a computer program to instruct the associated software. The program is stored in a non-transitory computer readable storage medium, when the program is executed, the processes such as those in the embodiments of each of the above methods can be included. Wherein, the storage medium may be a disk, a CD-ROM, a read-only memory (ROM), etc.

In this way, in the present application, a frame text and a recognition text are obtained through receiving a speech request and performing frame-by-frame recognition on the speech request, and the recognition text is the recognition result of all frames of the speech request. In the frame-by-frame recognition process, the frame text is predicted using a prediction model to obtain a prediction text, the prediction model is trained according to user language habits, and the prediction text is processed to obtain a first processing result. After the frame-by-frame recognition process is finished, the recognition text compared with the prediction text, and the first processing result is output as the natural language understanding result of the speech request when the recognition text matches with the prediction text. The present application has at least the following beneficial effects:

I. The speech request of the user can be recognized and subjected to natural language understanding.

II. In the present application, during the ASR recognition process and before the recognition is finished, the acquired frame text is predicted through the prediction model trained in advance to obtain a prediction text, which is equivalent to predicting the recognition text in advance and performing NLU on the prediction text. Compared with the traditional natural language understanding in which the ASR result is subjected to NLU after all the recognitions through the ASR are finished and after timeout waiting is finished, in the present application, through prediction in advance and NLU, NLU can be completed in advance during timeout waiting.

III. Further, in the present application, the prediction model is improved, the optimal prediction result can be screened out through the first prediction model containing user language habits, the second prediction model containing a large amount of training data in the application fields, and through merging the weights of the first prediction model and the second prediction model. The second prediction model ensures the validity of prediction to a certain extent through a large amount of training data. At the same time, the first prediction model is used for training based on the individual language data of users, especially for users with special language habits, real-time training and updating can be performed aiming at special characteristics, thereby effectively improving the accuracy of prediction, realizing the ability of diversification or customization to a certain extent, and outputting personalized prediction results for different users.

IV The device analyzes the model performance and prediction accuracy of each prediction model offline at regular or irregular intervals, and manually sets the weight policy, and manual adjustment can be performed aiming at individual language habits of users, so as to get a better prediction model to understand individual language of users. At the same time, the scores are calculated through the model accuracy and confidence level, so as to select the prediction text with the highest score as the final prediction result, thereby simplifying the implementation logic and improving the prediction speed to a certain extent.

V. The device calculates the loss of the finally acquired real recognition text and the prediction text, and updates the original weights through the calculation results, such that the weight policy of the device can be adjusted dynamically and adaptively, and the weights of each prediction model are optimized in real time by the real results in the real-time prediction process to make the final prediction results more accurate.

In the description of the present specification, the description with reference to the terms "an embodiment", "some embodiments", "schematic embodiment", "example", "specific example" or "some examples" means that the specific features, structures, materials or characteristics described in combination with the embodiment or example are included in at least one embodiment or example of the present application. In the present specification, the schematic representation of the above terms does not necessarily refer to the same embodiment or example. Moreover, the specific features, structures, materials, or characteristics described may be combined in a suitable manner in any one or more embodiments or examples. In addition, without conflicting with each other, those skilled in the art may combine the different embodiments or examples and the features of different embodiments or examples described in the present specification. Meanwhile, the description with reference to the terms "first", "second" and the like is intended to distinguish the same type of operations or similar operations, and the terms "first" and "second" have a logical relationship and do not necessarily have a logical or back-and-forth relationship and need to be determined according to the actual embodiment, and should not be determined only by the literal meaning.

Any process or method description in the flowchart or otherwise described herein may be understood to represent a module, a fragment, or a portion of codes including one or more executable instructions for implementing steps of a particular logical function or process, and the scope of the preferred embodiment of the present application includes additional implementations, wherein the functions may not be performed in the order shown or discussed, including the order according to the functions involved in a substantially simultaneous manner or in a reverse order, as should be understood by those skilled in the art to which the embodiments of the present application belong.

Although embodiments of the present application have been shown and described above, it should be understood that the above embodiments are exemplary and are not to be construed as limiting the present application, and that variations, modifications, substitutions and variants of the above embodiments may be made by those of ordinary skills in the art within the scope of the claims.

**Claims**

1. A natural language understanding method, comprising:

   training a prediction model that comprises a first prediction model and at least one second prediction model, including:

      training the first prediction model based on first data comprising data for user language habits; and
      training the second prediction model by training a deep learning model based on second data comprising data for application fields;

   receiving a speech request and recognizing the speech request frame by frame to obtain at each moment a frame text, being a recognition result from a starting frame to a current frame, and a recognition text, wherein the recognition text is a recognition result of all frames from the starting frame to an end frame in the speech request;
   performing prediction on the frame text using the prediction model to obtain a prediction text during the frame-by-frame recognition, said performing prediction on the frame text using a prediction model to obtain a prediction text comprises:

      performing prediction on the frame text using the first prediction model to obtain a first prediction text;
      performing prediction on the frame text using the at least one second prediction model to obtain a second prediction text; and
      determining the prediction text according to the first prediction text and the second prediction text;

   processing the prediction text to obtain a first processing result; and
   comparing the recognition text with the prediction text after the frame-by-frame recognition is finished, and when the recognition text matches with the prediction text, outputting the first processing result as a natural language understanding result for the speech request.

2. The natural language understanding method of claim 1, further comprising, before processing the prediction text to obtain the first processing result:

> determining whether the frame text satisfies a preset termination condition;
> said processing the prediction text to obtain a first processing result comprises:
> processing the prediction text to obtain the first processing result when the preset termination condition is satisfied.

3. The natural language understanding method of claim 1, wherein the first data comprises language data for user language habits within a preset time period, and wherein the first prediction model is generated through operations comprising:

> acquiring the language data to generate a corpus and pre-processing the corpus;
> generating a user dictionary according to the pre-processed corpus;
> generating a frequency distribution table according to the user dictionary to obtain the first prediction model; and wherein
> said performing prediction on the frame text using the first prediction model to obtain a first prediction text comprises:
> determining an output result with the highest probability in the frequency distribution table as the first prediction text according to the frame text.

4. The natural language understanding method of claim 1, wherein the prediction model further comprises an ensembling device, and wherein said determining the prediction text according to the first prediction text and the second prediction text comprises:
processing the first prediction text and the second prediction text using a preset weight policy in the ensembling device to determine the prediction text.

5. The natural language understanding method of claim 4, wherein said processing the first prediction text and the second prediction text using a preset weight policy in the ensembling device to determine the prediction text comprises:

> acquiring the first prediction text and a first confidence level of the first prediction text in the first prediction model, and the second prediction text and a second confidence level of the second prediction text in the second prediction model; and
determining the prediction text according to a first weight and a second weight of the ensembling device, the first confidence level and the second confidence level, wherein the first weight is determined in advance according to first model accuracy of the first prediction model, and the second weight is determined in advance according to second model accuracy of the second prediction model.

6. The natural language understanding method of claim 5, wherein said processing the first prediction text and the second prediction text using a preset weight policy in the ensembling device to determine the prediction text further comprises:

> optimizing the first weight and the second weight according to the recognition text, the first prediction text and the second prediction text using a preset weight updating formula, and updating the first weight and the second weight according to optimization results; and
> normalizing the updated first weight and the updated second weight and replacing the first weight and the second weight with normalization results respectively.

7. The natural language understanding method of claim 6, wherein the weight updating formula is as follows:

$$g_i(\omega) = p_i e^{-\eta\lambda(\gamma_i, \omega)}$$

wherein $\eta$ represents a learning rate, $p_i$ represents the first weight of the first prediction model or the second weight of the second prediction model, $\gamma_i$ represents a vector value of the first prediction text or the second prediction text, $\omega$ represents a vector value of the recognition text, and $\lambda(\gamma_i, \omega)$ represents a vector distance between the recognition text and the first prediction text or between the recognition text and the second prediction text.

8. A natural language understanding device (100), comprising:

> a training module (150), configured to train a prediction model that comprises a first prediction model and at least one second prediction model wherein the training module (150) is configured to
>> train the first prediction model based on first data comprising data for user language habits; and

train the second prediction model by training a deep learning model based on second data comprising data for application fields;

a recognition module (110), configured to receive a speech request and recognize the speech request frame by frame to obtain at each moment a frame text, being a recognition result from a starting frame to a current frame, and a recognition text, wherein the recognition text is a recognition result of all frames from the starting frame to an end frame in the speech request;
a prediction module (120), configured to perform prediction on the frame text using the prediction model to obtain a prediction text during the frame-by-frame recognition, wherein the prediction module (120) is configured to:

perform prediction on the frame text using the first prediction model to obtain a first prediction text;
perform prediction on the frame text using the at least one second prediction model to obtain a second prediction text; and
determine the prediction text according to the first prediction text and the second prediction text;

a processing module (130), configured to process the prediction text to obtain a first processing result; and
a matching module (140), configured to compare the recognition text with the prediction text after the frame-by-frame recognition is finished, and when the recognition text matches with the prediction text, output the first processing result as a natural language understanding result for the speech request.

9. A vehicle comprising memory and a processor, wherein the memory has stored thereupon a computer program which, when executed by the processor, results in performance of the natural language understanding method of any of claims 1-7.

10. A non-transitory computer readable storage medium storing a computer program which, when executed by one or more processors, results in performance of the natural language understanding method of any one of claims 1-7.

**Patentansprüche**

1. Verfahren zum Verstehen natürlicher Sprache, das Folgendes beinhaltet:

Trainieren eines Vorhersagemodells, das ein erstes Vorhersagemodell und mindestens ein zweites Vorhersagemodell umfasst, das Folgendes beinhaltet:

Trainieren des ersten Vorhersagemodells auf der Basis von ersten Daten, die Daten für Benutzersprachgewohnheiten umfassen; und
Trainieren des zweiten Vorhersagemodells durch Trainieren eines Deep-Learning-Modells auf der Basis von zweiten Daten, die Daten für Anwendungsfelder umfassen;

Empfangen einer Sprachanforderung und Erkennen der Sprachanforderung Frame für Frame, um zu jedem Zeitpunkt einen Frame-Text, der ein Erkennungsergebnis von einem Startframe bis zu einem aktuellen Frame ist, und einen Erkennungstext zu erhalten, wobei der Erkennungstext ein Erkennungsergebnis aller Frames vom Startframe bis zu einem Endframe in der Sprachanforderung ist;
Durchführen einer Vorhersage an dem Frame-Text anhand des Vorhersagemodells, um einen Vorhersagetext während der Frame-für-Frame-Erkennung zu erhalten, wobei das genannte Durchführen einer Vorhersage an dem Frame-Text anhand eines Vorhersagemodells zum Erhalten eines Vorhersagetexts Folgendes beinhaltet:

Durchführen einer Vorhersage an dem Frame-Text anhand des ersten Vorhersagemodells, um einen ersten Vorhersagetext zu erhalten;
Durchführen einer Vorhersage an dem Frame-Text anhand des mindestens einen zweiten Vorhersagemodells, um einen zweiten Vorhersagetext zu erhalten; und
Bestimmen des Vorhersagetexts gemäß dem ersten Vorhersagetext und dem zweiten Vorhersagetext;

Verarbeiten des Vorhersagetexts, um ein erstes Verarbeitungsergebnis zu erhalten; und
Vergleichen des Erkennungstexts mit dem Vorhersagetext nach Beendigung der Frame-für-Frame-Erkennung, und Ausgeben, wenn der Erkennungstext mit dem Vorhersagetext übereinstimmt, des ersten Verarbeitungsergebnisses als ein Ergebnis des Verstehens natürlicher Sprache für die Sprachanforderung.

2. Verfahren zum Verstehen natürlicher Sprache nach Anspruch 1, das ferner vor dem Verarbeiten des Vorhersagetexts zum Erhalten des ersten Verarbeitungsergebnisses Folgendes beinhaltet:

Feststellen, ob der Frame-Text eine vorgegebene Terminierungsbedingung erfüllt;

wobei das genannte Verarbeiten des Vorhersagetexts zum Erhalten eines ersten Verarbeitungsergebnisses Folgendes beinhaltet:

Verarbeiten des Vorhersagetexts zum Erhalten des ersten Verarbeitungsergebnisses, wenn die vorgegebene Terminierungsbedingung erfüllt ist.

3. Verfahren zum Verstehen natürlicher Sprache nach Anspruch 1, wobei die ersten Daten Sprachdaten für Benutzersprachgewohnheiten innerhalb eines vorgegebenen Zeitraums umfassen, und wobei das erste Vorhersagemodell durch Vorgänge erzeugt wird, die Folgendes beinhalten:

Erfassen der Sprachdaten zum Erzeugen eines Korpus und Vorverarbeiten des Korpus;

Erzeugen eines Benutzerwörterbuchs gemäß dem vorverarbeiteten Korpus;

Erzeugen einer Häufigkeitsverteilungstabelle gemäß dem Benutzerwörterbuch, um das erste Vorhersagemodell zu erhalten; und wobei

das genannte Durchführen einer Vorhersage an dem Frame-Text anhand des ersten Vorhersagemodells zum Erhalten eines ersten Vorhersagetexts Folgendes beinhaltet:

Bestimmen eines Ausgabeergebnisses mit der höchsten Wahrscheinlichkeit in der Häufigkeitsverteilungstabelle als den ersten Vorhersagetext gemäß dem Frame-Text.

4. Verfahren zum Verstehen natürlicher Sprache nach Anspruch 1, wobei das Vorhersagemodell ferner eine Ensembling-Vorrichtung umfasst, und wobei das genannte Bestimmen des Vorhersagetexts gemäß dem ersten Vorhersagetext und dem zweiten Vorhersagetext Folgendes beinhaltet:

Verarbeiten des ersten Vorhersagetexts und des zweiten Vorhersagetexts anhand einer vorgegebenen Gewichtungsrichtlinie in der Ensembling-Vorrichtung, um den Vorhersagetext zu bestimmen.

5. Verfahren zum Verstehen natürlicher Sprache nach Anspruch 4, wobei das genannte Verarbeiten des ersten Vorhersagetexts und des zweiten Vorhersagetexts anhand einer vorgegebenen Gewichtungsrichtlinie in der Ensembling-Vorrichtung zum Bestimmen des Vorhersagetexts Folgendes beinhaltet:

Erfassen des ersten Vorhersagetexts und eines ersten Konfidenzniveaus des ersten Vorhersagetexts im ersten Vorhersagemodell und des zweiten Vorhersagetexts und eines zweiten Konfidenzniveaus des zweiten Vorhersagetexts im zweiten Vorhersagemodell; und

Bestimmen des Vorhersagetexts gemäß einer ersten Gewichtung und einer zweiten Gewichtung der Ensembling-Vorrichtung, des ersten Konfidenzniveaus und des zweiten Konfidenzniveaus, wobei die erste Gewichtung im Voraus gemäß der ersten Modellgenauigkeit des ersten Vorhersagemodells bestimmt wird und die zweite Gewichtung im Voraus gemäß der zweiten Modellgenauigkeit des zweiten Vorhersagemodells bestimmt wird.

6. Verfahren zum Verstehen natürlicher Sprache nach Anspruch 5, wobei das genannte Verarbeiten des ersten Vorhersagetexts und des zweiten Vorhersagetexts anhand einer vorgegebenen Gewichtungsrichtlinie in der Ensembling-Vorrichtung zum Bestimmen des Vorhersagetexts ferner Folgendes beinhaltet:

Optimieren der ersten Gewichtung und der zweiten Gewichtung gemäß dem Erkennungstext, dem ersten Vorhersagetext und dem zweiten Vorhersagetext anhand einer vorgegebenen Gewichtungsaktualisierungsformel, und Aktualisieren der ersten Gewichtung und der zweiten Gewichtung gemäß Optimierungsergebnissen; und

Normalisieren der aktualisierten ersten Gewichtung und der aktualisierten zweiten Gewichtung und Ersetzen der ersten Gewichtung bzw. der zweiten Gewichtung durch Normalisierungsergebnisse.

7. Verfahren zum Verstehen natürlicher Sprache nach Anspruch 6, wobei die Gewichtungsaktualisierungsformel wie folgt lautet:

$$g_i(\omega) = p_i e^{-\eta\lambda(\gamma_i, \omega)}$$

wobei $\eta$ eine Lernrate darstellt, $p_i$ die erste Gewichtung des ersten Vorhersagemodells oder die zweite Gewichtung des zweiten Vorhersagemodells darstellt, $\gamma_i$ einen Vektorwert des ersten Vorhersagetexts oder des zweiten Vorhersagetexts darstellt, $\omega$ einen Vektorwert des Erkennungstextes darstellt, und λ $(\gamma_i, \omega)$ einen Vektorabstand zwischen dem Erkennungstext und dem ersten Vorhersagetext oder zwischen dem Erkennungstext und dem zweiten Vorhersagetext darstellt.

8. Vorrichtung (100) zum Verstehen natürlicher Sprache, die Folgendes umfasst:

ein Trainingsmodul (150), das zum Trainieren eines Vorhersagemodells konfiguriert ist, das ein erstes Vorhersagemodell und mindestens ein zweites Vorhersagemodell umfasst, wobei das Trainingsmodul (150) konfiguriert ist zum:

Trainieren des ersten Vorhersagemodells auf der Basis von ersten Daten, die Daten für Benutzersprachgewohnheiten umfassen; und

Trainieren des zweiten Vorhersagemodells durch Trainieren eines Deep-Learning-Modells auf der Basis von zweiten Daten, die Daten für Anwendungsfelder umfassen;

ein Erkennungsmodul (110), konfiguriert zum Empfangen einer Sprachanforderung und zum Erkennen der Sprachanforderung Frame für Frame, um zu jedem Zeitpunkt einen Frame-Text, der ein Erkennungsergebnis von einem Startframe bis zu einem aktuellen Frame ist, und einen Erkennungstext zu erhalten, wobei der Erkennungstext ein Erkennungsergebnis aller Frames vom Startframe bis zu einem Endframe in der Sprachanforderung ist;

ein Vorhersagemodul (120), das zum Durchführen einer Vorhersage an dem Frame-Text anhand des Vorhersagemodells zum Erhalten eines Vorhersagetexts während der Frame-für-Frame-Erkennung konfiguriert ist, wobei das Vorhersagemodul (120) konfiguriert ist zum:

Durchführen einer Vorhersage an dem Frame-Text anhand des ersten Vorhersagemodells, um einen ersten Vorhersagetext zu erhalten; und

Durchführen einer Vorhersage an dem Frame-Text anhand des mindestens einen zweiten Vorhersagemodells, um einen zweiten Vorhersagetext zu erhalten; und

Bestimmen des Vorhersagetexts gemäß dem ersten Vorhersagetext und dem zweiten Vorhersagetext;

ein Verarbeitungsmodul (130), das zum Verarbeiten des Vorhersagetexts konfiguriert ist, um ein erstes Verarbeitungsergebnis zu erhalten; und

ein Abgleichmodul (140), konfiguriert zum Vergleichen des Erkennungstexts mit dem Vorhersagetext nach Beendigung der Frame-für-Frame-Erkennung und zum Ausgeben, wenn der Erkennungstext mit dem Vorhersagetext übereinstimmt, des ersten Verarbeitungsergebnisses als ein Ergebnis des Verstehens natürlicher Sprache für die Sprachanforderung.

9. Fahrzeug mit einem Speicher und einem Prozessor, wobei auf dem Speicher ein Computerprogramm gespeichert ist, das bei Ausführung durch den Prozessor zur Durchführung des Verfahrens zum Verstehen natürlicher Sprache nach einem der Ansprüche 1-7 führt.

10. Nichtflüchtiges computerlesbares Speichermedium, auf dem ein Computerprogramm gespeichert ist, das bei Ausführung durch einen oder mehrere Prozessoren zur Durchführung des Verfahrens zum Verstehen natürlicher Sprache nach einem der Ansprüche 1-7 führt.

**Revendications**

1. Procédé de compréhension de langage naturel, comprenant les étapes consistant à :

former un modèle de prédiction qui comprend un premier modèle de prédiction et au moins un second modèle de prédiction, ce qui comprend les étapes consistant à :

former le premier modèle de prédiction sur la base de premières données comprenant des données relatives à des habitudes linguistiques d'utilisateur ; et

former le second modèle de prédiction en formant un modèle d'apprentissage profond sur la base de secondes données comprenant des données relatives à des domaines d'application ;

recevoir une demande vocale et reconnaître la demande vocale trame par trame afin d'obtenir à chaque instant un texte de trame, qui est un résultat de reconnaissance d'une trame de départ à une trame actuelle, ainsi qu'un texte de reconnaissance, le texte de reconnaissance étant un résultat de reconnaissance de toutes les trames dans la demande vocale, de la trame de départ à une trame de fin ;

réaliser une prédiction sur le texte de trame au moyen du modèle de prédiction afin d'obtenir un texte de prédiction pendant la reconnaissance trame par trame, ladite réalisation d'une prédiction sur le texte de trame au moyen d'un modèle de prédiction afin d'obtenir un texte de prédiction comprenant les étapes consistant à :

réaliser une prédiction sur le texte de trame au moyen du premier modèle de prédiction afin d'obtenir un premier texte de prédiction ;

réaliser une prédiction sur le texte de trame au moyen de l'au moins un second modèle de prédiction afin d'obtenir un second texte de prédiction ; et

déterminer le texte de prédiction selon le premier texte de prédiction et le second texte de prédiction ;

traiter le texte de prédiction afin d'obtenir un premier résultat de traitement ; et

comparer le texte de reconnaissance au texte de prédiction une fois la reconnaissance trame par trame terminée et, lorsque le texte de reconnaissance correspond au texte de prédiction, délivrer en sortie le premier résultat de traitement en tant que résultat de compréhension de langage naturel pour la demande vocale.

**2.** Procédé de compréhension de langage naturel selon la revendication 1, comprenant en outre, avant le traitement du texte de prédiction afin d'obtenir le premier résultat de traitement, l'étape consistant à :

déterminer si le texte de trame satisfait à une condition de fin prédéfinie ;
ledit traitement du texte de prédiction afin d'obtenir un premier résultat de traitement comprenant l'étape consistant à :
traiter le texte de prédiction afin d'obtenir le premier résultat de traitement lorsque la condition de fin prédéfinie est satisfaite.

**3.** Procédé de compréhension de langage naturel selon la revendication 1, dans lequel les premières données comprennent des données de langage relatives à des habitudes linguistiques d'utilisateur dans une période de temps prédéfinie, et dans lequel le premier modèle de prédiction est généré par des opérations comprenant les étapes consistant à :

acquérir les données linguistiques pour générer un corpus et prétraiter le corpus ;
générer un dictionnaire d'utilisateur selon le corpus prétraité ;
générer un tableau de distribution de fréquences selon le dictionnaire d'utilisateur afin d'obtenir le premier modèle de prédiction ; et
ladite réalisation d'une prédiction sur le texte de trame au moyen du premier modèle de prédiction afin d'obtenir un premier texte de prédiction comprenant l'étape consistant à :
déterminer un résultat de sortie ayant la probabilité la plus élevée dans le tableau de distribution de fréquences en tant que premier texte de prédiction selon le texte de trame.

**4.** Procédé de compréhension de langage naturel selon la revendication 1, dans lequel le modèle de prédiction comprend en outre un dispositif d'assemblage, et dans lequel ladite détermination du texte de prédiction selon le premier texte de prédiction et le second texte de prédiction comprend l'étape consistant à :
traiter le premier texte de prédiction et le second texte de prédiction au moyen d'une stratégie de pondération prédéfinie dans le dispositif d'assemblage afin de déterminer le texte de prédiction.

**5.** Procédé de compréhension de langage naturel selon la revendication 4, dans lequel ledit traitement du premier texte de prédiction et du second texte de prédiction au moyen d'une stratégie de pondération prédéfinie dans le dispositif d'assemblage afin de déterminer le texte de prédiction comprend les étapes consistant à :

acquérir le premier texte de prédiction et un premier niveau de confiance du premier texte de prédiction dans le premier modèle de prédiction, et le second texte de prédiction et un second niveau de confiance du second texte de prédiction dans le second modèle de prédiction ; et déterminer le texte de prédiction selon un premier poids et un second poids du dispositif d'assemblage, le premier niveau de confiance et le second niveau de confiance, le premier poids étant déterminé à l'avance selon une première précision de modèle du premier modèle de prédiction, et le second poids étant déterminé à l'avance selon une seconde précision de modèle du second modèle de prédiction.

**6.** Procédé de compréhension de langage naturel selon la revendication 5, dans lequel ledit traitement du premier texte de prédiction et du second texte de prédiction au moyen d'une stratégie de pondération prédéfinie dans le dispositif d'assemblage afin de déterminer le texte de prédiction comprend en outre les étapes consistant à :

optimiser le premier poids et le second poids selon le texte de reconnaissance, le premier texte de prédiction et le second texte de prédiction au moyen d'une formule prédéfinie de mise à jour de poids, et mettre à jour le premier poids et le second poids selon des résultats d'optimisation ; et
normaliser le premier poids mis à jour et le second poids mis à jour et remplacer respectivement le premier poids et le second poids par des résultats de normalisation.

**7.** Procédé de compréhension de langage naturel selon la revendication 6, dans lequel la formule de mise à jour de poids est la suivante :

$$g_i(\omega) = p_i e^{-\eta \lambda(\gamma_i, \omega)}$$

où $\eta$ représente un taux d'apprentissage, $p_i$ représente le premier poids du premier modèle de prédiction ou le second poids du second modèle de prédiction, $\gamma_i$ représente une valeur vectorielle du premier texte de prédiction ou du second texte de prédiction, $\omega$ représente une valeur vectorielle du texte de reconnaissance, et $\lambda(\gamma_i, \omega)$ représente une distan-

ce vectorielle entre le texte de reconnaissance et le premier texte de prédiction ou entre le texte de reconnaissance et le second texte de prédiction.

8. Dispositif de compréhension de langage naturel (100), comprenant :

un module de formation (150), configuré pour former un modèle de prédiction qui comprend un premier modèle de prédiction et au moins un second modèle de prédiction, le module de formation (150) étant configuré pour :

former le premier modèle de prédiction sur la base de premières données comprenant des données relatives à des habitudes linguistiques d'utilisateur ; et
former le second modèle de prédiction en formant un modèle d'apprentissage profond sur la base de secondes données comprenant des données relatives à des domaines d'application ;

un module de reconnaissance (110), configuré pour recevoir une demande vocale et reconnaître la demande vocale trame par trame afin d'obtenir à chaque instant un texte de trame, qui est un résultat de reconnaissance d'une trame de départ à une trame actuelle, ainsi qu'un texte de reconnaissance, le texte de reconnaissance étant un résultat de reconnaissance de toutes les trames dans la demande vocale, de la trame de départ à une trame de fin ;
un module de prédiction (120), configuré pour réaliser une prédiction sur le texte de trame au moyen du modèle de prédiction afin d'obtenir un texte de prédiction pendant la reconnaissance trame par trame, le module de prédiction (120) étant configuré pour :

réaliser une prédiction sur le texte de trame au moyen du premier modèle de prédiction afin d'obtenir un premier texte de prédiction ;
réaliser une prédiction sur le texte de trame au moyen de l'au moins un second modèle de prédiction afin d'obtenir un second texte de prédiction ; et
déterminer le texte de prédiction selon le premier texte de prédiction et le second texte de prédiction ;

un module de traitement (130), configuré pour traiter le texte de prédiction afin d'obtenir un premier résultat de traitement ; et
un module de correspondance (140), configuré pour comparer le texte de reconnaissance au texte de prédiction une fois la reconnaissance trame par trame terminée et, lorsque le texte de reconnaissance correspond au texte de prédiction, pour délivrer en sortie le premier résultat de traitement en tant que résultat de compréhension de langage naturel pour la demande vocale.

9. Véhicule comprenant une mémoire et un processeur, la mémoire stockant un programme informatique qui, lorsqu'il est exécuté par le processeur, entraîne la réalisation du procédé de compréhension de langage naturel selon l'une quelconque des revendications 1 à 7.

10. Support de stockage non transitoire lisible par ordinateur, stockant un programme informatique qui, lorsqu'il est exécuté par un ou plusieurs processeurs, entraîne la réalisation du procédé de compréhension de langage naturel selon l'une quelconque des revendications 1 à 7.

receiving a speech request and recognizing the speech request frame by frame to obtain a frame text and a recognition text — 01

performing prediction on the frame text using a prediction model to obtain a prediction text during the frame-by-frame recognition — 02

processing the prediction text to obtain a first understanding result — 03

comparing the recognition text with the prediction text after the frame-by-frame recognition is finished — 04

Matching

outputting the first understanding result as a natural language understanding result for the speech request — 04

Fig. 1

100

Natural language
understanding device

| Recognition module | 110 |
| Prediction module | 120 |
| Processing module | 130 |
| Matching module | 140 |

Fig. 2

```
┌─────────────────────────────┐
│   receiving a speech request and    │  01
│ recognizing the speech request frame│
│  by frame to obtain a frame text and a│
│       recognition text              │
└─────────────────────────────┘
                │
                ▼
┌─────────────────────────────┐
│ performing prediction on the frame text│  021
│   using the first prediction model to │
│  obtain a first prediction text during the│
│    frame-by-frame recognition process │
└─────────────────────────────┘
                │
                ▼
┌─────────────────────────────┐
│ performing prediction on the frame text│  022
│  using the at least one second prediction│
│  model to obtain a second prediction text│
└─────────────────────────────┘
                │
                ▼
┌─────────────────────────────┐
│     determining the prediction text  │  023
│ according to the first prediction text and│
│      the second prediction text      │
└─────────────────────────────┘
                │
                ▼
┌─────────────────────────────┐
│ processing the prediction text to obtain│  03
│     a first understanding result     │
└─────────────────────────────┘
                │
                ▼
          ◇ comparing the recognition        04
            text with the prediction text after
            the frame-by-frame recognition is
                  finished ◇
                │
            Matching
                ▼
┌─────────────────────────────┐
│ outputting the first understanding result│  04
│   as a natural language understanding │
│     result for the speech request    │
└─────────────────────────────┘
```

Fig. 3

001

acquiring language data to generate a
corpus and pre-processing the corpus

002

generating a user dictionary according to a
pre-processed corpus

003

generating a frequency distribution table
according to a user dictionary to obtain a
first prediction model

01

receiving a speech request and recognizing
the speech request frame by frame to obtain
a frame text and a recognition text

0211

determining an output result with a highest
probability in a frequency distribution table
as a first prediction text according to a
frame text

022

performing prediction on the frame text
using the at least one second prediction
model to obtain a second prediction text

023

determining the prediction text according to
a first prediction text and a second
prediction text

03

determining the prediction text according to
the first prediction text and the second
prediction text

04

comparing the recognition
text with the prediction text after the
frame-by-frame recognition is
finished

Matching

04

outputting the first understanding result as a
natural language understanding result for
the speech request

Fig. 4

100

Natural language
understanding device

110

Recognition
module

120

Prediction
module

130

Processing
module

140

Matching
module

150

Training module

Fig. 5

| | Da | Kai | Kong | Tiao | Qi | Xun | Huan |
|---|---|---|---|---|---|---|---|
| Da | 0.002 | 0.87 | 0.0028 | 0 | 0 | 0 | 0 |
| Kai | 0.0001 | 0.11 | 0.42 | 0.0011 | 0.152 | 0.231 | 0.0036 |
| Kong | 0 | 0.22 | 0 | 0.66 | 0.46 | 0 | 0 |
| Tiao | 0 | 0.33 | 0.0023 | 0 | 0.0032 | 0 | 0 |
| Qi | 0 | 0.0017 | 0.041 | 0.101 | 0.0005 | 0.432 | 0 |
| Xun | 0.0001 | 0.0027 | 0 | 0 | 0.102 | 0 | 0 |
| Huan | 0.0036 | 0.22 | 0.089 | 0.101 | 0.1123 | 0.142 | 0 |

Fig. 6

receiving a speech request and
recognizing the speech request frame
by frame to obtain a frame text and a
recognition text

01

performing prediction on the frame text
using the first prediction model to
obtain a first prediction text

021

performing prediction on the frame text
using the at least one second prediction
model to obtain a second prediction text

022

processing the first prediction text and
the second prediction text using a preset
weight policy in the merging device to
determine the prediction text

0231

processing the prediction text to obtain
a first understanding result

03

comparing the recognition
text with the prediction text after
the frame-by-frame recognition
is finished

04

Matching

Outputting a first understanding result
as a natural language understanding
result of a speech request

04

Fig. 7

Fig. 8

```
                                                              01
┌─────────────────────────────────────────┐    ⌐
│ receiving a speech request and recognizing│   /
│ the speech request frame by frame to obtain a│
│   frame text and a recognition text        │
└─────────────────────────────────────────┘
                    │
                    ▼                          021
┌─────────────────────────────────────────┐    ⌐
│ performing prediction on the frame text using│ /
│  the first prediction model to obtain a first│
│            prediction text                  │
└─────────────────────────────────────────┘
                    │
                    ▼                          022
┌─────────────────────────────────────────┐    ⌐
│ performing prediction on the frame text using│ /
│ the at least one second prediction model to │
│       obtain a second prediction text       │
└─────────────────────────────────────────┘
                    │
                    ▼                          02311
┌─────────────────────────────────────────┐
│ acquiring the first prediction text and a first│
│ confidence level of the first prediction text in│  ⌐
│   the first prediction model, and the second   │  /
│  prediction text and a second confidence level │
│    of the second prediction text in the second │
│            prediction model                    │
└─────────────────────────────────────────┘
                    │
                    ▼                          02312
┌─────────────────────────────────────────┐    ⌐
│ determining the prediction text according to a│ /
│    first weight and a second weight of the    │
│ merging device, the first confidence level and│
│         the second confidence level           │
└─────────────────────────────────────────┘
                    │                          03
                    ▼                          ⌐
┌─────────────────────────────────────────┐    /
│ processing the prediction text to obtain a first│
│            understanding result            │
└─────────────────────────────────────────┘
                    │
                    ▼                          04
              ╱╲                              ⌐
           ╱        ╲                         /
        ╱  comparing the recognition ╲
      ╱  text with the prediction text after ╲
      ╲  the frame-by-frame recognition is  ╱
         ╲       finished          ╱
           ╲              ╱
              ╲╱
                    │ Matching
                    ▼                          04
┌─────────────────────────────────────────┐    ⌐
│ outputting the first understanding result as a│ /
│ natural language understanding result for the │
│            speech request                  │
└─────────────────────────────────────────┘
```

Fig. 9

01

receiving a speech request and recognizing the speech request frame by frame to obtain a frame text and a recognition text

021

performing prediction on the frame text using the first prediction model to obtain a first prediction text

022

performing prediction on the frame text using the at least one second prediction model to obtain a second prediction text

02313

optimizing the first weight and the second weight according to the recognition text, the first prediction text and the second prediction text using a preset weight updating formula, and updating the first weight and the second weight according to optimization results

02314

normalizing the updated first weight and the updated second weight and replacing the first weight and the second weight with normalization results respectively

03

processing the prediction text to obtain a first understanding result

04

comparing the recognition text with the prediction text after the frame-by-frame recognition is finished

Matching

04

outputting the first understanding result as a natural language understanding result for the speech request

Fig. 10

receiving a speech request and recognizing the speech request frame by frame to obtain a frame text and a recognition text — 01

performing prediction on the frame text using a prediction model to obtain a prediction text during the frame-by-frame recognition — 02

judging whether the frame text satisfies a preset termination condition — 05

processing the prediction text to obtain the first understanding result when the preset termination condition is satisfied — 031

comparing the recognition text with the prediction text after the frame-by-frame recognition is finished — 04

Matching

outputting the first understanding result as a natural language understanding result for the speech request — 04

Fig. 11

100

Natural language
understanding device

| Recognition module | 110 |
| Prediction module | 120 |
| Processing module | 130 |
| Matching module | 140 |
| Training module | 150 |
| Judgment module | 160 |

Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021104236 A1